# EUROPEAN PATENT SPECIFICATION

(11) **EP 1 465 487 B1**
(45) Date of publication and mention of the grant of the patent: **05.12.2007**
(21) Application number: 02790280.8
(22) Date of filing: 23.12.2002
(51) Int. Cl.: A01N 25/34

(54) **PESTICIDAL BLANKET**
PESTIZIDE DECKE
COUVERTURE PESTICIDE

(30) Priority: 22.12.2001 DK 200101956
(43) Date of publication of application: 13.10.2004
(73) Proprietor: Disease Control Textiles SA, 1002 Lausanne (CH)
(72) Inventor: FRANDSEN, Mikkel, Vestergaard, DK-6000 Kolding (DK); SKOVMAND, Ole, F-34070 Montpellier (FR)
(74) Representative: Gregersen, Niels Henrik
(86) International application number: PCT/DK2002/000903
(87) International publication number: WO 2003/055307

(56) References cited:
- EP-A- 0 382 382
- WO-A-01/37662
- WO-A-01/56372
- WO-A-96/28974
- US-A- 4 008 688
- US-A- 5 515 811
- DATABASE WPI Section Ch, Week 199021 Derwent Publications Ltd., London, GB; Class A97, AN 1990-159742 XP002234779 & JP 02 101002 A (TAKIRON CO), 12 April 1990 (1990-04-12)
- DATABASE WPI Section Ch, Week 198450 Derwent Publications Ltd., London, GB; Class A83, AN 1984-310175 XP002234780 & JP 59 194709 A (SEKISUI CHEM IND CO LTD) , 5 November 1984 (1984-11-05)
- DATABASE WPI Section Ch, Week 199631 Derwent Publications Ltd., London, GB; Class A23, AN 1996-307145 XP002234781 & JP 08 134720 A (TEIJIN LTD), 28 May 1996 (1996-05-28)

## Description

### Field of the Invention

The present invention relates to a pesticidal blanket for human protection against pests.

### Background of the Invention

In order to prevent human being from the nuisance of insects, it is well-known to impregnate fabrics and nettings with insecticides, as for example disclosed in International patent application WO 01/37662. In this patent application, a method is described to prevent the insecticide from being removed from the fabric or net by washing.

Having a fabric impregnated with pesticides such that the pesticide is situated on both surfaces of the fabric, makes such fabrics unsuited for direct covering of the skin of the human body, because many pesticides, for example insecticides, may cause allergic reactions on the skin or other kind of irritation. The same type of argument applies for fabrics, where the impregnation is on that side of the fabric which covers the human body.

Especially for transport to emergency areas, for example tropical refugee camps, where transport is performed by aircrafts, blankets should be of little weight in order to be able to transport many blankets with one aircraft. Also, for this type of application, it is desirable that that blankets are cheap, because the budget for relief aid in most situations is very limited.

In the situation, where blankets are used in emergency areas, United Nations (UN) requires a number of material properties according to well defined minimum criteria. Apart from being of low weight and cheap to produce, a number of other requirements have to be fulfilled. Thus, such blankets need to have a high tensile strength and wear resistance.

It is the purpose of the invention to provide an insecticidal blanket of an improved type where during use the direct skin contact with the insecticide is avoidable. Especially, the blanket should have a low weight and be cheap to produce. Furthermore, the blanket should have sufficient tensile strength.

### Description of the invention

This purpose is achieved by a pesticidal blanket comprising a fibrous, voluminous sheet without insecticide forming a first side of said blanket and a sheet structure attached to the second side of said blanket and forming at least part of the surface of the second side of said blanket, wherein said sheet structure contains an insecticide.

The blanket has to be understood as a sheet member, which is used for example for covering beds or directly for covering human. As pests are considered insects, as Coleoptera, Lepitopera, Diptera, Homoptera, Isoptera, Hemiptera, Orthoptera, Thysanoptera, for example, mosquitos biting flies, fleas, bed bugs and other nuisance or vector insects and acaracides.

The sheet structure is attached to the fibrous sheet in a way such that the insecticide extends only to one side of the blanket, because the skin of the person using the blanket should not be exposed to the insecticide. The insecticide containing sheet structure may be a net structure attached to the blanket, for example the net structure may be attached to the fibrous sheet. The net structure may be single fibres, bunches of fibres, a net, or a fleece that is attached to the shed by gluing, heat sealing/bonding, sewing, weaving, knitting, needle punching or stitch bonding. The net structure may also be constituted by the fibres that are sewed into the fibrous sheet or the final blanket, for example by stitch bonding, where the fibres extend to the surface of the second side.

One of the possibilities for construction of the pesticidal blanket, or insecticidal is a sheet of a non-woven material, which preferably is stabilised by fibres through stitch bonding or needle punching. Sheets of non woven material can be produced very cheaply. Usually, however, the tensile strength and wear resistance is not sufficient, but with an attached net on one side, for example the net being of the form as known mosquito nets, the strength is increased such that it complies with the minimum requirements for blankets according to the United Nations.

When stitch bonding is used for non-woven sheets, the fibre for the bonding itself may be impregnated with an insecticide, so that the aforementioned net may even be avoided, leaving a very cheaply produced material, which nevertheless has a tensile strength due to the bonding fibres.

Alternatively, the insecticide containing sheet structure may be a film attached to the second side of the blanket, for example a thin foil glued to one side of the blanket or partly melted into the second side of the blanket. Also such a blanket may be produced as a light weight structure, which is mechanically stabilised by the film.

The sheet for the pesticidal blanket may contain extensively carded, fibrous material. In this case, a high volume of the sheet is achieved which results in a high thermal insulating property of the blanket The overall consequence of using this extensive carding of the fibrous material is a blanket which has a high thermal insulation and, at the same time, a low weight The combination of the non-woven material with a stabilising film, a net, or fibres results in a blanket with high thermal insulation properties, low weight, inexpensive production, and a high tensile strength fulfilling the requirements of the UN.

The insecticide may be integrated in the stabilising structure, as explained above. However, the insecticidal effect and the stabilising effect may be achieved by different means. For example the sheets structure may comprise a non-insecticidal net structure that is glued onto the second side of the blanket, where the glue contains an insecticide. Insects that much the blanket on the insecticidal side would inevitably also touch the glue and be exposed to the insecticide. The glue may also be used in connection with insecticidal fibres in order to increase the insecticidal efficiency of the blanket.

The glue used in connection with the invention should be understood broadly and may be a resin or any polymer glue including polyurethane or polyacryl based substances. The glue may also be of a type to be heated in order to glue. An alternative way of attachment is by heat sealing/bonding, which may equally well be applied in connection with the invention.

The material for the blanket may be wool or any other suitable natural fibrous material. Also suitable is polypropylene as a fibre material or other polymer fibres. Preferred is in many cases a blend of fibres of different materials, where a content of 10% - 20% wool is advantageous for such a blanket.

Although a non-woven sheet may be preferred due to reduced production costs, easy production and more pronounced light weight potential, also woven material may be used in connection with the invention. In this case, a net may be bonded to the woven sheet material in an analogue way as to the non-woven sheet. Weaving may also be performed by having the fibres impregnated with an insecticide or the fibres containing insecticides for migration from the inner part of the fibres to the surface of the fibres.

As possible agents may be used Alphacypermethrin or Lambdacyhalothrin or other agents as given in the following.

The present invention relates to but is not limited to the following active insecticides selected from the group comprising pyrethroid compounds such as
- Etofenprox: 2-(4-ethoxyphenl)-2-methylpropyl-3-phenoxybenzyl ether,
- Fenvalerate: (RS)-alpha-cyeno-3-phenoxybenzyl (RS)-2-(4-chlorophenyl)-3 methylbutyrate,
- Esfenvalerate:(S)-alpha-cyano-3-phenoxybenzyl (S)-2-(4-chlorophenyl)-3-methylbutyrate,
- Fenpropathrin: (RS)-alpha-cyano-3-phenoxybenzyl 2,2,3,3-tetramethylcyclopropanecarboxylate,
- Cypermethrin: (RS)-alpha-cyano-3-phenoxybenzyl (1RS)-cis, trans-3-(2,2-dichlorovinyl)-2,2-dimethylcyclopropanecarboxylate,
- Permethrin: 3-phenoxybenzyl (1RS)-cis,trans-3-(2,2-dichlorovinyl)-2,2- dimethylcyclopropanecarboxylate,
- Cyhalothrin: (RS)-alpha-cyano-3-phenoxybenzyl (Z)-(1RS)-cis-3- (2-chloro-3,3,3-trifluoroprop-1-enyl)-2,2-dimethylcyclopro panecarboxylate,
- Deltamethrin: (S)-alpha-cyano-3-phenoxybenzyl (1R)-cis-3-(2,2-dibromovinyl) - 2,2-dimethylcyclopropanecarboxylate,
- Cycloprothrin: (RS)-alpha-cyano-3-phenoxybenzyl (RS)-2,2-dichloro-1-(4-ethoxyphenyl)cyclopropanecarboxylate,
- Fluvalinate (alpha-cyano-3-phenoxybenzyl N-(2-chloro-alpha,alpha,alpha-trifluoro-p-tolyl) -D-valinate),
- Bifenthrin: (2-methylbiphenyl-3-ylmethyl)0(Z)-(1RS)-cis-3-(2-chloro-3,3,3-trifluoro-1-propenyl) -2,2-dimethylcyclopropanecarboxylate,
- 2-methyl-2-(4-bromodifluoromethoxyphenyl)propyl
- (3-phenoxybenzyl) ether,
- Tralomethrin: (S)-alpha-cyano-3-phenoxybenzyl (1R-cis)3((1'RS)(1',2',2',2'-tetrabromoethyl)) -2,2-dimethylcyclopropanecarboxylate,
- Silafluofen: 4-ethoxyphenyl (3-(4-fluoro-3-phenoxyphenyl)propyl}dimethylsilane,
- D-fenothrin: 3-phenoxybenzyl (1R)-cis, trans)-chrysanthemate,
- Cyphenothrin: (RS)-alpha-cyano-3-phenoxybenzyl (1R-cis, trans)-chrysanthemate, D-resmethrin: 5-benzyl-3-furylmethyl (1R-cis, trans)-chrysanthemate,
- Acrinathrin: (S)-alpha-cyano-3-phenoxybenzyl (1R-cis(Z))-(2,2-dimethyl-3-(oxo-3-(1,1,1,3,3,3-hexafluoropropyloxy)propenyl(cyclopropanecarboxylate,
- Cyfluthrin: (RS)-alpha-cyano-4-fluoro-3-phenoxybenzyl 3-(2,2-dichlorovinyl)-2,2-dimethylcyclopropanecarboxylate,
- Tefluthrin: 2,3,5,6-tetrafluoro-4-methylbenzyl (1RS-cis (Z))-3-(2-chloro-3,3,3-trifluoroprop-1-enyl)-2,2-dimethylcyclopropanecarbo xylate,
- Transfluthrin: 2,3,5,6-tetrafluorobenzyl (1R-trans)-3-(2,2-dichlorovinyl) -2,2-dimethylcyclopropanecarboxylate,
- Tetramethrin: 3,4,5,6-tetrahydrophthalimidomethyl (1RS)-cis, trans-chrysanthemate,
- Allethrin: (RS)-3-allyl-2-methyl-4-oxocyclopent-2-enyl (1RS)-cis, trans-chrysanthemate,
- Prallethrin: (S)-2-methyl-4-oxo-3-(2-propynyl)cyclopent-2-enyl (1R)-cis, trans-chrysanthemate,
- Empenthrin: (RS)-1-ethynyl-2-methyl-2-pentenyl (1R)-cis,trans-chrysanthemate,
- Imiprothrin: 2,5-dioxo-3-(prop-2-ynyl)imidazolidin-1-ylmethyl (1R)-cis, trans-2,2-dimethyl-3-(2-methyl-1-propenyl)-cyclopropanecarboxylate,
- D-flamethrin: 5-(2-propynyl)-furfuryl (1R)-cis, trans-chrysanthemate, and 5-(2-propynyl)furfuryl 2,2,3,3-tetramethylcyclopropanecarboxylate;
other active insecticides that may be used alone or in combination, but preferably not mixed with pyrethroids, are e.g. carbamate compounds such as
- Alanycarb: S-methyl-N[[N-methyl-N-[N-benzyl-N(2-ethoxy-carbonylethyl)aminothio]carbamoyl]thioacetimidate,
- Bendiocarb: 2,2-dimethyl-1,3-benzodioxol-4yl-methylcarbamate),
- Carbaryl (1-naphthyl N-methylcarbamate,
- Isoprocarb: 2-(1-methylethyl) phenyl methylcarbamate,
- Carbosulfan: 2,3 dihydro-2,2-dimethyl-7-benzofuranyl [(dibutylamino)thio]methylcarbamate,
- Fenoxycarb: Ethyl[2-(4-phenoxyphenoxy)ethyl] carbamate,
- Indoxacarb: Methyl-7-chloro-2,3,4a,5-tetrahydro-2-[methoxycarbonyl (-4-trifluoromethoxyphenyl)]
- Propoxur: 2-isopropyloxyphenol methylcarbamate,
- Pirimicarb: 2-dimethylamino-5,6-dimethyl-4-pyrimidinyl- dimethylcarbamate, Thidiocarb: Dimethyl N,N'(thiobis((methylimino)carbonoyloxy)bisethanimidiothioate),
- Methomyl: S-methyl N-((methylcarbamoyl)oxy)thioacetamidate,
- Ethiofencarb: 2-((ethylthio)methyl)phenyl methylcarbamate,
- Fenothiocarb: S-(4-phenoxybutyl)-N,N-dimethyl thiocarbamate,
- Cartap: S,S'-(2-5dimethylamino)trimethylene)bis (thiocarbamate)hydrochloride, Fenobucarb: 2-sec-butylphenylmethyl carbamate, 3,5-dimethylphenyl-methyl carbamate,
- Xylylcarb: 3,4-dimethylphenylmethylcarbamate; additionally, active insecticides such as organophosphorous compounds may be applied in accordance with the invention including compounds such as
- Fenitrothion: O,O-dimethyl 0-(4-nitro-m-tolyl) phosphorothioate,
- Diazinon: 0,0-diethyl-0-(2-isopropyl-6-methyl-4-pyrimidinyl) phosphorothioate,
- Pyridaphenthion: 0-(1,6-dihydro-6-oxo-1-phenylpyrazidin-3-yl) 0,0-diethyl phosphorothioate,
- Pirimiphos-Etyl: 0,0-diethyl 0-(2-(diethylamino) 6-methyl-pyrimidinyl) phosphorothioate,
- Pirimiphos-Methyl: 0-[2-(diethylamino)-6-methyl-4pyrimidinyl] 0,0-dimethyl phosphorothioate,
- Etrimphos: 0-6-ethoxy-2-ethyl-pyrimidin-4-yl-0,0-dimethyl-phosphorothioate,
- Fenthion: 0,0-dimethyl-0-[-3-methyl-4-(methylthio) phenyl phosphorothioate,
- Phoxim: 2-(diethoxyphosphinothoyloxyimino)-2-phenylacetonitrile,
- Chlorpyrifos: 0,0-diethyl-0-(3,5,6-trichloro-2-pyrinyl) phosphorothioate,
- Chlorpyriphos-methyl: 0,0-dimethyl 0-(3,5,6-trichloro-2-pyridinyl) phosphorothioate,
- Cyanophos: 0,0-dimethyl 0-(4cyanophenyl) phosphorothioate,
- Pyraclofos: (R,S)[4-chlorophenyl)-pyrazol-4-yl]-0-ethyl-S-n-propyl phosphorothioate, Acephate: 0,S-dimethyl acetylphosphoroamidothioate,
- Azamethiphos: S-(6-chloro-2,3-dihydro-oxo-1,3-oxazolo [4,5-b] pyridin-3-ylmethyl phosphorothioate,
- Malathion: 0,0-dimethyl phosphorodithioate ester of diethyl mercaptosuccinate,
- Temephos: (0,0'(thiodi-4-1-phenylene) 0,0,0,0-tetramethyl phosphorodithioate,
- Dimethoate: ((0,0-dimethyl S-(n-methylcarbamoylmethyl) phosphorodithioate,
- Formothion: S[2-formylmethylamino]-2-oxoethyl]-O,O-dimethyl phosphorodithioate,
- Phenthoate: 0,0-dimethyl S-(alpha-ethoxycarbonylbenzyl)-phosphorodithioate;
in addition, especially for ticks and mites, the following insecticides may be applied:
- Neonicotioids as Acetamidiprid and Imidacloprid: 1-(6-chloro-3-pyridylmethyl)-N-nitro-2-imidazolidimine;
- Pyridins as Pyriproxyfen: 2-[1-+methyl-2-(4-phenoxyphenoxy)ethoxyy]pyridine;
- Pyrimidines as Pyremidifen 5-chloro-N-(2,-[4-(2-ethoxyethyl)-2,3-dimethyl-phenoxy]-ethyl)6-ethylpyrimid in-4-amin
- Quinazoline as Fenazaquin: 4-[[-(1,1-dimethylethyl)phenyl, pyrazoler and phenyl
- Pyrazoles as Dihydropyrazole, Fipronile, Tebufenpyrad, and Fenpyroproximate: 1,1-dimethylethyl-4-[[[[(1,3-dimethyl-5-phenoxy-1H-pyrazol-4-yl)-methylene]ammo] oxy]methyl]benzoate]
- Pyrazoner as Tebufenpyrad,
- Carbonitrils as Vaniliprol,
- Hydrazins as Tebufenozide,
- Hydrazons,
- Azomethins,
- Diphenyls as Bifenazate
- Benzoylurea and derivatives thereof;
furthermore active insecticides with a sterilising effect on adult mosquitoes and/or with a growth regulating effect may applied such as:
- (alfa-4-(chloro-alpha-cyclopropylbenzylidenamino-oxy)-p-tolyl)-3-(2,6-diflourobenzoyl)urea,
- Diflubenzuron: N-(((3,5-dichloro-4-(1,1,2,2-tetraflouroethoxy)phenylamino) carbonyl)2,6 diflouro benzamid,
- Triflumuron: 2-Chloro-N-(((4-(triflouromethoxy) phenyl)-amino-)carbonyl) benzamide, or
- a triazin such as N-cyclopropyl- 1,3,5 -triazine-2,4,6-triamin.

Especially interesting among the possible insecticides or pesticides are Etofenprox, which is regarded as resulting in allergic reaction only to very little degree, Permethrin, which is the most used pesticide in fabrics that are used against insects. However, the dose to be applied on the fibres of the fabric is rather high for the former two. This may be a problem for net structures, where the thickness of the fibre is small.

Therefore, for thin fibres, insecticides with high insecticidal acitivy per a.i. and low mammalian toxicity are preferred such as Bifenthrin.

Though the skin is not supposed to be in direct contact with a fibre that is impregnated with insecticides, it is preferred that the insecticides that are used for impregnation have low risk of allergic reactions.

As can be understood from the foregoing, the blanket according to the invention can be produced with low weight and inexpensively. Still, it can have very high thermal insulation properties. The blanket according to the invention may be constructed that it has a high tensile strength and contains an insecticide for preventing human being from being subjected to nuisance from insects without the human being subjected to the insecticide himself.

In order to enhance the isolating properties of the blanket according to the invention, a pesticidal blanket according to the invention in a further embodiment comprises a layer with a metallic surface, preferably an aluminium foil. This can be accomplished if the blanket comprises a further fibrous, voluminous sheet and wherein an aluminium foil is located between the fibrous sheet and the further fibrous sheet.

In order to provide a blanket for emergency use, it may be of advantage if the blanket is provided with substances that may promote healing of injury. For example, the non-insecticidal sheet may on its surface - the first surface of the blanket, which is intended directed towards the human body - be provided with a disinfecting, antibacterial, and/or wound healing substance that evaporates or is disposed when touched. Also, the blanket may be provided with evaporating substances that cause certain other effects on the human being using the blanket. For example, the blanket may contain evaporable substances that have a relaxing effect on the user or a stimulating effect. Further, substances which may have a pain relieving effect may be considered, or nicotine, HRT hormones, antibiotics or even certain cancer drugs.

Possible agents for treating the first side of the blanket, which is intended for being directed towards the human body are fungicides for treatment of, for example, dermophytes appearing on skin, hair and nails. Other fungis to be treated may be Trichophyton, Epidermphyton spp. or Microsporium spp. The used fungicides may be of different kinds, for example, lamisil, terbinafine, novartis or griseofulvin types.

Furthermore, the intended substance on the first side of the blanket may be used for treatment of
- superficial mycoses infections limited to the outermost layers of the skin and hair, for example, Pityriasis versicolor, Tinea nigra, Black piedra, white piedra,
- cutaneous mycoses that extend deeper into the epidermis as well as invasive hair and nail diseases such as Microsporum, Trichophyton, Epidermophyton,
- cutaneous mycoses including chronic infections and initiated by trauma to the skin involving the dermis subcutaneous tissues, muscle and fascia,
- systemic mycoses including infections that originate primary in lungs and may spread to many organ systems.

Also, the medical substance for treatment of the first side of the blanket may relate to fungicidal treatment for counteracting AIDS. The most serious fungal infection in Aids patients is Cryptococcus neoformans. Infections associated with Aids include Apergillus spp., Candida spp., Cryptococcus spp., Rhizopus spp., Absidia spp., Rhizomucon spp., which may be treated with respective substances. Possible treatment of the first side of the blanket may include antibiotics, for example of family nystatins.

### Short description of the drawing

The invention will be explained in more detail in the following with reference to the drawings, where
- FIG. 1: is schematic drawing of a blanket according to the invention,
- FIG. 2: is a drawing of another embodiment according to the invention,
- FIG. 3: is a drawing of a blanket including glue,
- FIG. 4: is a drawing of a blanket covered with a film
- FIG. 5: shown further embodiments,
- FIG. 6: is a drawing of a blanket with a glued on aluminium foil.

### Detailed Description of the Invention

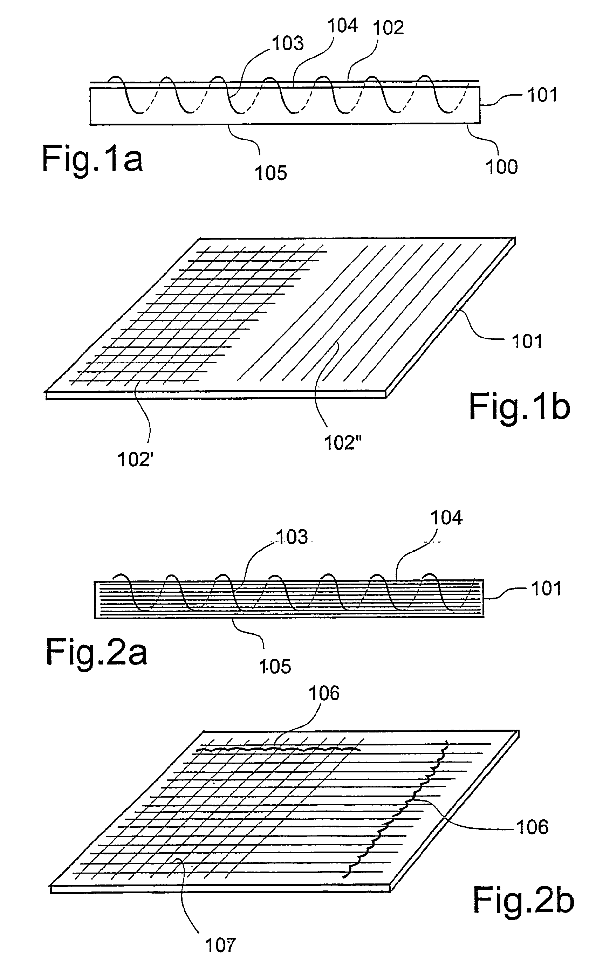

FIG. 1a shows one embodiment of a blanket 100 according to the invention. The blanket 100 comprises a fibrous, voluminous sheet 101 without insecticide forming a first side 105 of the blanket 100. On the second side 104 of the blanket 100, an insecticide containing sheet structure in the form of a net structure 102 is attached. The net structure 102 may be a conventional net 102', as indicated in FIG. 1b, for example a mosquito net or equivalent as described in International patent application WO 01/37662. The net structure 102 may also be a number of fibres 102" that are located on the second side 104 of the blanket 100. The net structure 102, 102', 102" is attached to the sheet 101 by fibres 103, as indicated on FIG. 1 a, for instance through stitch bonding. The fibre 103 may be impregnated with an insecticide as is the net structure 102. The net structure 102 and the fastening of the net structure 102 to the sheet 101 may have a stiffness which is suitable for the actual purpose of the blanket 100.

An alternative way to attach the net structure 102 to the sheet 101 is by needle punching, where the needle is pushed through the sheet 101 and fibres inside the sheet 101 are dragged out of the sheet 101 and around the fibres of the net structure 102.

In FIG. 2a, a different embodiment of the invention is shown. The blanket 100 with sheet 101 in this case is provided with fibres 103 that extend at least partly into the sheet 101. These fibres 103 are impregnated with a pesticide that extends outside the sheet 101 only on the second side 104 of the sheet 101 and forms part of the surface of the second side 104. In this case, the opposite, first side 105 of the sheet 101 will not have pesticidal fibres 103 extending to the surface of the first side 104 of the sheet 101. In case that the sheet 101 is made of a woven material as illustrated in FIG. 2b warp fibres 106 that stabilise the woven fibres 107 are impregnated with an insecticide to achieve the desired anti-insect property. Alternatively to an impregnation with insecticide, the fibres may have an insecticide incorporated into the fibres, where the insecticide, with time, migrates to the surface of the fibres.

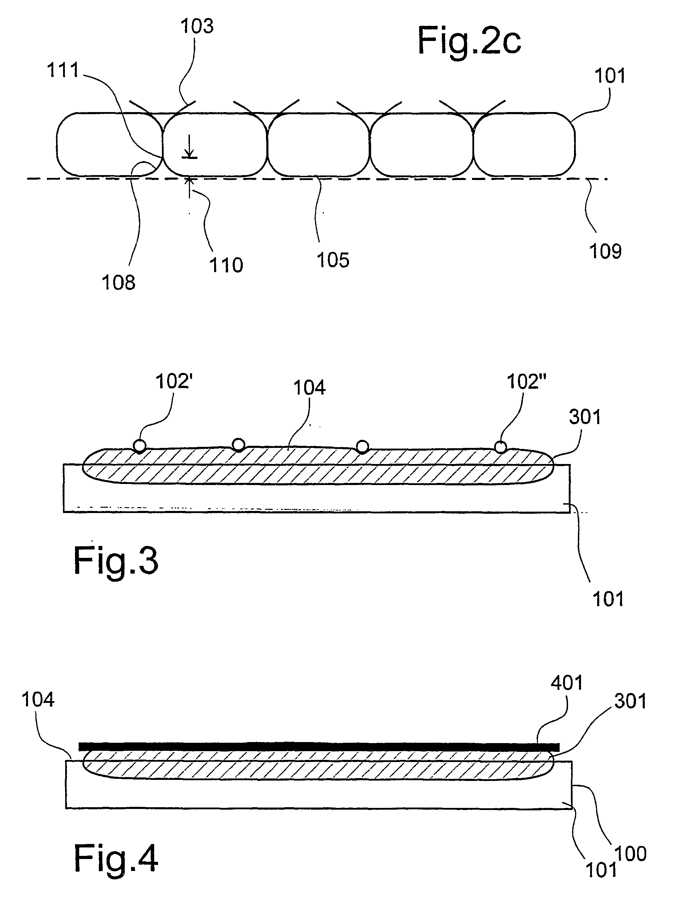

As illustrated in fig 2c, in fact, bonding fibres 103 may traverse the whole sheet 101. As the fibre 103 is tightened, part 108 of the sheet 101 is dragged towards the centre of the sheet 101. Therefore, though the pesticide impregnated fibre 103 traverses the whole sheet 101, it does not extend to the overall surface 105 of the first side 105 of the sheet 101 which is supposed to be facing the human body. This is very clearly seen with respect to the surface line 109 from which a substantial distance 110 between this surface line 109 and the end 111 of the bonding in the sheet 101.

FIG. 3 illustrates a further embodiment of the invention. In this case, a net structure 102, shown in cross section as fibres 102', 102", is attached to the fibrous sheet 101 by glue 301. The glue 301 partly surrounds the fibres 102', 102", and extends partly into the second side 104 of the fibrous sheet 101.

A thin fleece may be used for substitution of the net. Such a fleece may be glued to the fibrous sheet 101 as well. IF the glue extends to both sides of the fleece, the glue may advantageously contain an insecticide.

FIG. 4 illustrates a blanket 100 according to the invention, where a fibrous sheet 101 on the second side 104 is at least partly covered with a film 401 that contains releasable insecticide. Preferably, this film is attached with glue 301.

Due to the advantageous properties of a blanket 100 according to the invention, the pesticidal blanket 100 is highly suited for emergency areas like refugee camps or areas, where natural catastrophes have occurred, or in war areas. The pesticidal blanket 100 according to the invention satisfies the criteria from the UN concerning emergency equipment. However, the blanket 100 according to the invention is cheaper to manufacture than traditional blankets used for this kind of activity. The blanket 100 according to the invention has a sufficient tensile strength and in addition, it has got active pesticides without implying a high risk for allergic reactions on the human being that uses the blanket.

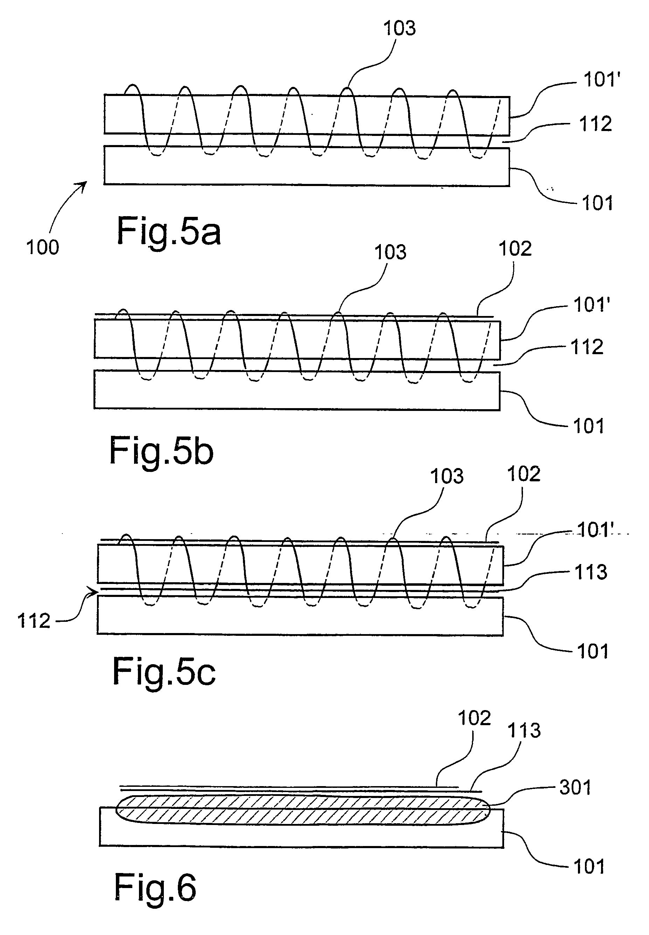

In FIG. 5a, an alternative embodiment is shown, where the fibrous sheet 101 of the blanket 100 is supplemented with a further fibrous sheet 101', and insecticide containing fibres 103 are used for the attachment. The further fibrous sheet may for example made of the known commercial material Thinsulate® from the company called 3M or similar masterials, or may be of the same kind as the fibrous sheet 101. In the figures, the space 112 between the fibrous sheets 101, 101' are exaggerated for practical reasons of illustration. In addition, a net structure 102 may be attached as well, as illustrated in FIG. 5b, in order to enhance the surface area of the material containing insecticides. In the case as illustrated on FIG. 5b, the fibres 103 need not to contain insecticide, as the insecticidal effect of the net structure 102 may be sufficient.

In order to enhance the isolating properties of the blanket 100 according to the invention, the blanket 100 may comprise a metallic sheet 103, as shown in FIG. 5c, for example an aluminium foil, eventually stabilised by a laminate.

In order to obtain a blanket 100, which is water proof, an aluminium foil 113 may be glued by a layer of glue to the fibrous sheet 101, which is illustrated on FIG. 6. A net structure 102 containing insecticide may be attached to the aluminium foil 113 by melting or by gluing, as the fibres of the net structure 102 may be made of thermoplastic polymer.

In analogy to the embodiment as shown in FIG. 6, a fastening by gluing may be applied in connection with FIG. 5b and 5c instead of the use of fibres 103.

How a net structure 102 is fabricated or impregnated is described in the aforementioned International patent application WO 01/37662. However, impregnation is not the only way for incorporating insecticides into the fibres of the sheet structure 102. For example, it is also possible to include insecticides in polymer fibres during the production process of such fibres, where the insecticide forms part of the fibre material and migrates from the inside of the fibres to the surface of the fibres. This has the effect that the insecticide may not be removed by washing, as already after a short while after washing, the insecticide will occur on the surface again.

The fibrous, voluminous sheet 101 according to the invention may comprise an antibacterial, disinfecting substance, for example a bactericide or bacteriostat, or other substances which by surface release, for example evaporation, affects the user of the blanket.

For blankets to be used for relieve aid in connection with UN operations, the blanket according to the invention preferably has a thickness of between 3 mm and 8 mm, a width of between 100 cm and 200 cm, more preferably around 150 cm, and a weight of between 250 g/m² and 500 g/m².

Other preferred parameters are 16 - 36 mesh per cm² in the netting constituting the preferred sheet structure where the netting has a yarn of 75 - 180 denier. The insecticidal treatment may be in the order of 40 - 120 mg/m², however dependent on the purpose and the kind of insecticide.

## Claims

1. Pesticidal blanket comprising a fibrous, voluminous sheet without insecticide forming a first side of said blanket and a sheet structure attached to the second side of said blanket and forming at least part of the surface of the second side of said blanket, wherein said sheet structure contains an insecticide and comprises at least one from the group consisting of
- fibres, attached to the blanket by gluing, heat sealing/bonding, sewing, weaving, knitting, needle punching, or stitch bonding,
- a net, attached to the blanket by gluing, heat sealing/bonding, sewing, weaving, knitting, needle punching, or stitch bonding,
- fleece attached to the blanket by gluing, heat sealing/bonding, sewing, weaving, knitting, needle punching or stitch bonding,
- fibres sewed into the blanket, preferably by stitch bonding, and extending to the surface of the second side,
- a film glued onto or melted into the second side of the blanket.

2. Pesticidal blanket according to claim 1, wherein the fibrous, voluminous sheet comprises a blend of fibres of different materials with a content of wool of between 10% and 20%..

3. Pesticidal blanket according to claim 1 or 2, wherein said glue contains an insecticide.

4. Pesticidal blanket according to any of the claims 1 - 3, wherein said sheet is non-woven.

5. Pesticidal blanket according to claim 4, wherein said non-woven sheets is stabilised by fibres through stitch bonding or needle punching.

6. Pesticidal blanket according to any of the claims 1 - 5; wherein said sheet contains extensively carded fibrous material; preferably containing wool, for achieving a higt volume of the sheet.

7. Pesticidal blanket according to any of the claims 1 - 3, wherein said sheet is of a woven type.

8. Pesticidal blanket according to claim 7, wherein the warp of the woven sheet comprises insecticide impregnated fibres.

9. Pesticidal blanket according to any of the claims 1-8, wherein the insecticide is at least one from the group consisting of Bifentrin, Etofenprox, Permethrin, Deltamytrin, Alphacypermethrin, and Lambdacyhalothrin.

10. Pesticidal blanket according to any of the claims 1 - 9, wherein the blanket comprises a layer with a metallic surface, preferably an aluminium foil.

11. Pesticidal blanket according to any of the claims 1-10, wherein the blanket comprises a further fibrous, voluminous sheet and wherein an aluminium foil is located between the fibrous sheet and the further fibrous sheet.

12. Pesticidal blanket according to any of the claims 1-11, wherein first side of the blanket is provided with a disinfecting, antibacterial, and/or wound healing substance that evaporates or is disposed when touched.

13. Pesticidal blanket according to any of the claims 1-12, wherein first side of the blanket is provided with evaporable substances that have a relaxing effect on the user or a stimulating effect.

14. Pesticidal blanket according to any of the claims 1-13, wherein first side of the blanket is provided with a fungicide.

15. Use of a pesticidal blanket according to claim 1 - 11 in emergency areas.

## Patentansprüche

1. Pesticide Decke, umfassend eine fasrige, voluminöse Folie ohne Insektizid, die eine erste Seite der Decke bildet, und eine Folienstruktur, die an der zweiten Seite der Decke befestigt ist und wenigstens einen Teil der Oberfläche der zweiten Seite der Decke bildet, wobei die Folienstruktur ein Insektizid enthält und wenigstens eines aus der Gruppe, bestehend aus
- Fasern, die durch Leimen, Heißsiegeln/Bindung, Nähen, Weben, Stricken, Vernadeln oder Nähbinden an der Decke befestigt sind;
- einem Netz, das durch Leimen, Heißsiegeln/Bindung, Nähen, Weben, Stricken, Vernadeln oder Nähbinden an der Decke befestigt ist;
- Vlies, das durch Leimen, Heißsiegeln/Bindung, Nähen, Weben, Stricken, Vernadeln oder Nähbinden an der Decke befestigt ist;
- Fasern, die in die Decke genäht sind, vorzugsweise durch Nähbinden, und sich zu der Oberfläche der zweiten Seite erstrecken;
- einem Film, der auf die zweite Seite der Decke geleimt ist oder in die zweite Seite der Decke geschmolzen ist,
umfasst.

2. Pesticide Decke nach Anspruch 1, wobei die fasrige, voluminöse Folie eine Mischung von Fasern aus unterschiedlichen Materialien mit einem Wollegehalt von zwsichen 10 % und 20 % umfasst.

3. Pesticide Decke nach Anspruch 1 oder 2, wobei der Leim ein Insektizid enthält.

4. Pesticide Decke nach einem der Ansprüche 1 - 3, wobei die Folie ungewebt (non-woven) ist.

5. Pesticide Decke nach Anspruch 4, wobei die ungewebte Folie mit Fasern durch Nähbinden oder Vernadelung stabilisiert ist.

6. Pesticide Decke nach einem der Ansprüche 1-5, wobei die Folie zur Erreichung eines hohen Volumens der Folie extensiv cardiert fasriges Material, das vorzugsweise Wolle enthält, enthält.

7. Pesticide Decke nach einem der Ansprüche 1-3, wobei die Folie ein gewebter Typ ist.

8. Pesticide Decke nach Anspruch 7, wobei die Kettfäden der gewebten Folie mit Insektizid imprägnierte Fasern umfassen.

9. Pesticide Decke nach einem der Ansprüche 1-8, wobei das Insektizid wenigstens eines aus der Gruppe, bestehend aus Bifentrin, Etofenprox, Permethrin, Deltamytrin, Alphacypermethrin und Lambdacyhalothrin, ist.

10. Pesticide Decke nach einem der Ansprüche 1 - 9, wobei die Decke eine Schicht mit einer metallischen Oberfläche, vorzugsweise eine Aluminiumfolie, umfasst.

11. Pesticide Decke nach einem der Ansprüche 1 - 10, wobei die Decke eine weitere fasrige, voluminöse Folie umfasst, und wobei die Aluminiumfolie zwischen der fasrigen Folie und der weiteren fasrigen Folie angeordnet ist.

12. Pesticide Decke nach einem der Ansprüche 1-11, wobei die erste Seite der Decke mit einer desinfizierenden, antibakteriellen und/oder wundheilenden Substanz versehen ist, die verdampft oder beseitigt wird, wenn eine Berührung erfolgt.

13. Pesticide Decke nach einem der Ansprüche 1 - 12, wobei die erste Seite der Decke mit verdampfbaren Substanzen versehen ist, die eine entspannende Wirkung auf den Verwender oder eine stimulierende Wirkung haben.

14. Pesticide Decke nach einem der Ansprüche 1 - 13, wobei die erste Seite der Decke mit einem Fungizid versehen ist.

15. Verwendung einer pesticiden Decke nach den Ansprüchen 1 - 11 in Notfallbereichen.

## Revendications

1. Couverture pesticide comprenant une feuille volumineuse fibreuse sans insecticide formant un premier côté de ladite couverture et une structure en feuille attachée au second côté de ladite couverture et faisant au moins partie de la surface du second côté de ladite couverture, dans laquelle ladite structure en feuille contient un insecticide et comprend au moins une couverture choisie dans le groupe constitué par
- des fibres, attachées à la couverture par collage, thermoscellage/liaison, couture, tissage, tricotage, aiguilletage ou liage par piqûre,
- un filet, attaché à la couverture par collage, thermoscellage/liaison, couture, tissage, tricotage, aiguilletage ou liage par piqûre,
- une toison attachée à la couverture par collage, thermoscellage/liaison, couture, tissage, tricotage, aiguilletage ou liage par piqûre,
- des fibres cousues dans la couverture, de préférence par liage par piqûre et s'étendant vers la surface du second côté,
- un film collé sur ou fondu sur le second côté de la couverture.

2. Couverture pesticide selon la revendication 1, dans laquelle la feuille volumineuse fibreuse comprend un mélange de fibres de différents matériaux ayant une teneur en laine comprise entre 10 % et 20 %.

3. Couverture pesticide selon la revendication 1 ou 2, dans laquelle ladite colle contient un insecticide.

4. Couverture pesticide selon l'une quelconque des revendications 1 à 3, dans laquelle ladite feuille est non tissée.

5. Couverture pesticide selon la revendication 4, dans laquelle ladite feuille non tissée est stabilisée par des fibres par liage par piqûre ou aiguilletage.

6. Couverture pesticide selon l'une quelconque des revendications 1 à 5, dans laquelle ladite feuille contient de manière extensive un matériau fibreux cardé ; contenant de préférence de la laine, pour obtenir un volume élevé de la feuille.

7. Couverture pesticide selon l'une quelconque des revendications 1 à 3, dans laquelle ladite feuille est d'un type tissé.

8. Couverture pesticide selon la revendication 7, dans laquelle l'entremaille de la feuille tissée comprend des fibres imprégnées d'insecticide.

9. Couverture pesticide selon l'une quelconque des revendications 1 à 8, dans laquelle l'insecticide est au moins choisi dans le groupe constitué par la bifentrine, l'etofenprox, la perméthrine, la deltamytrine, l'alphacyperméthrine et la lambdacyhalothrine.

10. Couverture pesticide selon l'une quelconque des revendications 1 à 9, dans laquelle la couverture comprend une couche ayant une surface métallique, de préférence une feuille d'aluminium.

11. Couverture pesticide selon l'une quelconque des revendications 1 à 10, dans laquelle la couverture comprend une feuille volumineuse fibreuse supplémentaire et dans laquelle une feuille d'aluminium est située entre la feuille fibreuse et la feuille fibreuse supplémentaire.

12. Couverture pesticide selon l'une quelconque des revendications 1 à 11, dans laquelle le premier côté de la couverture est doté d'une substance désinfectante, antibactérienne et/ou qui soigne les plaies qui s'évapore ou est dispersée lorsqu'elle est touchée.

13. Couverture pesticide selon l'une quelconque des revendications 1 à 12, dans laquelle le premier côté de la couverture est doté de substances qui peuvent s'évaporer qui ont un effet relaxant sur l'utilisateur ou un effet stimulant.

14. Couverture pesticide selon l'une quelconque des revendications 1 à 13, dans laquelle le premier côté de la couverture est doté d'un fongicide.

15. Utilisation d'une couverture pesticide selon les revendications 1 à 11 dans des zones d'urgence.
